# EUROPEAN PATENT SPECIFICATION

(11) **EP 3 230 710 B1**
(45) Date of publication and mention of the grant of the patent: **07.06.2023**
(21) Application number: 15805504.6
(22) Date of filing: 08.12.2015
(51) Int. Cl.: G01N 1/08

(54) **A SAMPLING APPARATUS**
PROBENAHMEVORRICHTUNG
APPAREIL D'ÉCHANTILLONNAGE

(30) Priority: 10.12.2014 EP 14197144; 23.09.2015 EP 15186500
(43) Date of publication of application: 18.10.2017
(73) Proprietor: Altratech Limited, Limerick, V94 AT85 (IE)
(72) Inventor: O'FARRELL, Brian, County Cork (IE); O'SULLIVAN, Cian Desmond, Limerick (IE)
(74) Representative: Weldon O'Brien Ltd.
(86) International application number: PCT/EP2015/078957
(87) International publication number: WO 2016/091868

(56) References cited:
- EP-A2- 1 595 503
- US-A1- 2003 129 738
- US-A1- 2012 197 157
- US-B1- 6 315 737

## Description

### INTRODUCTION

### Field of the Invention

The invention relates to an apparatus for taking a sample of a material for analysis, for example meat or other foodstuffs in retail or manufacturing environments.

### Prior Art Discussion

There is an increasing need for food to be sampled at various stages along the food supply chain, in response to consumer demands for increased food safety, traceability, and content authenticity verification. However, food and meat sampling methods are still slow and cumbersome, involving knives or scalpels, weigh-scales, bags and jars - with inevitable risk of mix-ups and crosscontamination between samples. A faster, simpler, better method is needed.

WO2008/034847 (Parlanca) describes a sampling device having a handle and a scraping edge. US6315737 (Skinner) describes a biopsy needle with an aperture for aspiration.

EP1595503 (Inrad) describes an outer cutting cannula in telescoping register with an inner spoon cannula.

However, there is a need for an apparatus to take samples from material such as meat in a manner which:
(a) is very convenient, taking little time, and/or
(b) provides a small sample, preferably with a standardised volume, suitable for immediate use in testing, and/or
(c) does not require a large degree of user training and skill, and/or
(d) is simple and inexpensive to manufacture.
(e) has negligible impact on the product from which the sample is taken.

The invention is directed towards providing an apparatus to achieve some or all of the above.

### SUMMARY OF THE INVENTION

According to the invention, there is provided a sampling apparatus as claimed in claim 1, and features thereof are set out in dependent claims 2 to 13. Also, the invention provides a method as set out in claims 14 and 15.

### DETAILED DESCRIPTION OF THE INVENTION

### Brief Description of the Drawings

The invention will be more clearly understood from the following description of some embodiments thereof, given by way of example only with reference to the accompanying drawings in which
Fig. 1 is a set of side, end, and perspective views of a sampling apparatus of the invention;
Fig. 2 is an enlarged side view and cross-sectional view in a plane along the length of the apparatus;
Figs. 3(a), 3(b), and 3(c) are each diagrammatic side and cross-sectional views of the apparatus in use approaching a meat carcass, with its tip in the carcass, and after being removed with a meat sample, respectively;
Fig. 4(a) is a side view of an apparatus having a reagent chamber in open and closed positions, and Fig. 4(b) is a pair of such views showing the apparatus in cross-section;
Figs. 5(a) to 5(j) is a set of views showing an alternative apparatus, in which:

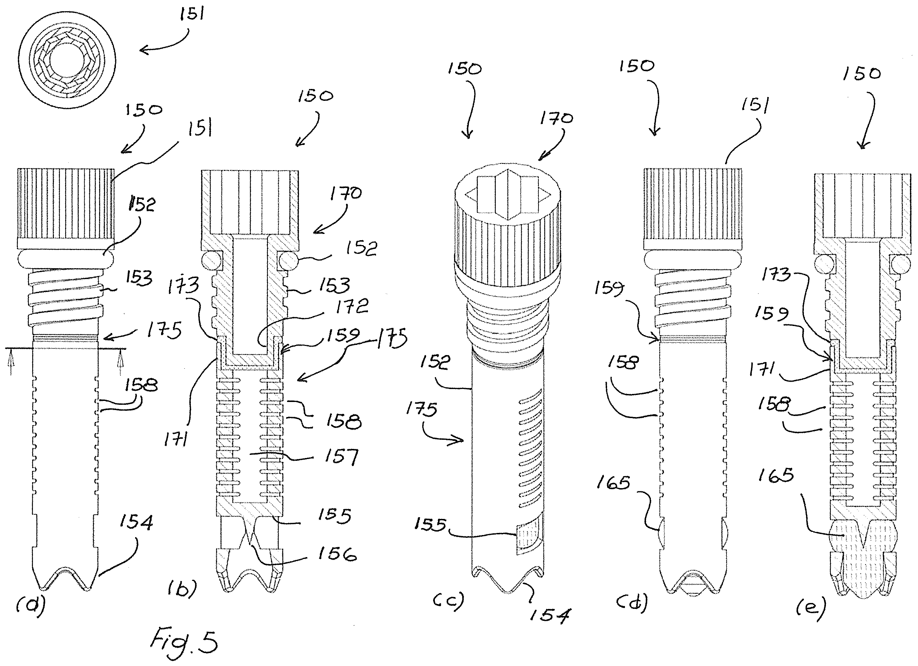

   Fig. 5(a) shows a sample capture part of a sampling apparatus of another embodiment,
   Fig. 5(b) is a cross-sectional view through the length of the sample capture part,
   Fig. 5(c) is a perspective view of this part,
   Fig. 5(d) is a front view of this part,
   Fig. 5(e) is a cross-sectional view after taking a sample of meat,

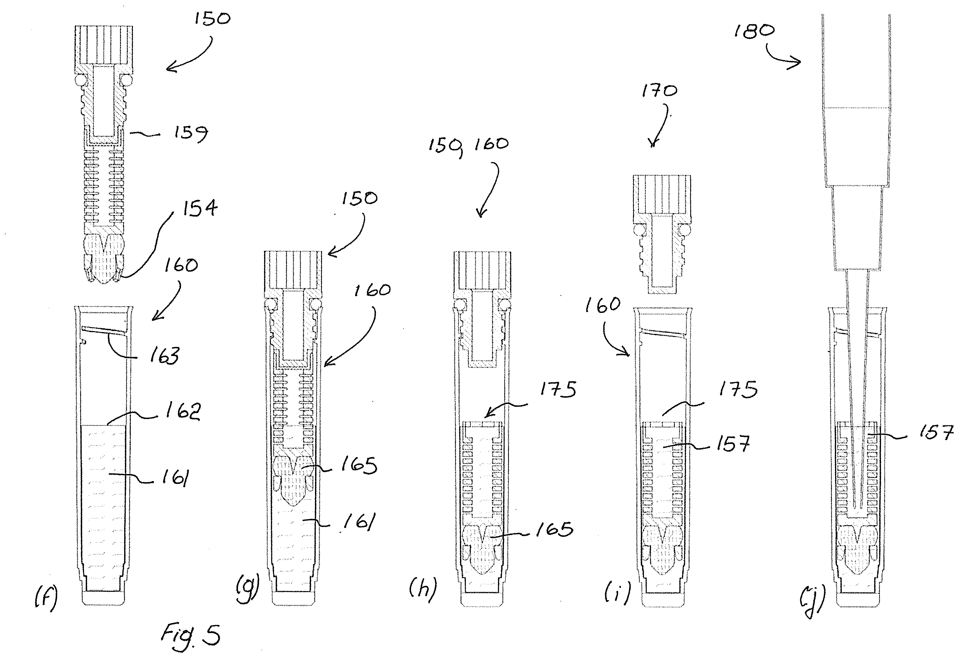

   Fig. 5(f) is a cross-sectional view along the length of the apparatus including a tube for analysis of the sample, the sample capture part being inserted in the tube,
   Fig. 5(g) is a cross-sectional view with the sample capture part in the tube, with the sample in contact with a lysis buffer provided in the tube,
   Fig. 5(h) is a cross-sectional view after a reaction chamber part of the sample capture part has separated from a handle part by application of heat,
   Fig. 5(i) shows removal of the handle part, and
   Fig. 5(j) shows insertion of a pipette for removing reagents for analysis;

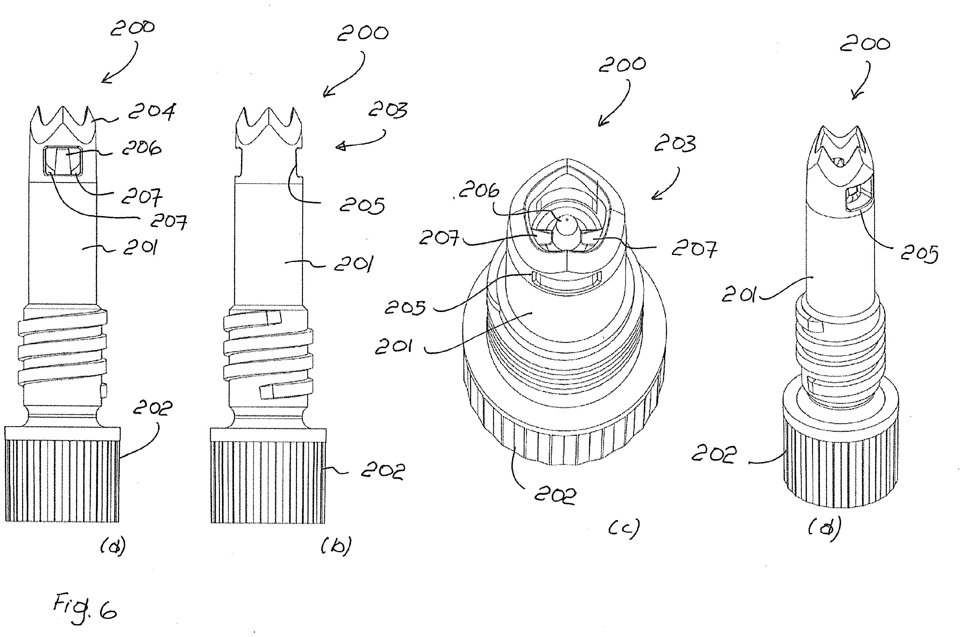

Figs. 6(a) to 6(d) are two elevational views from different angles and two top perspective views from different angles of an alternative apparatus;

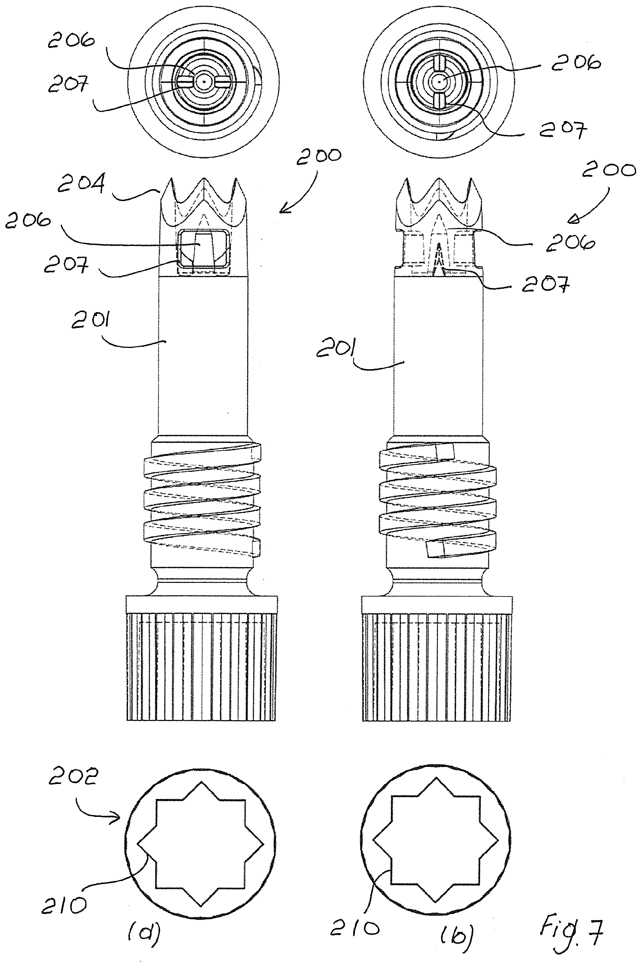

Figs. 7(a) and 7(b) each show the device of Fig. 6 in top plan, elevational, and underneath plan views;

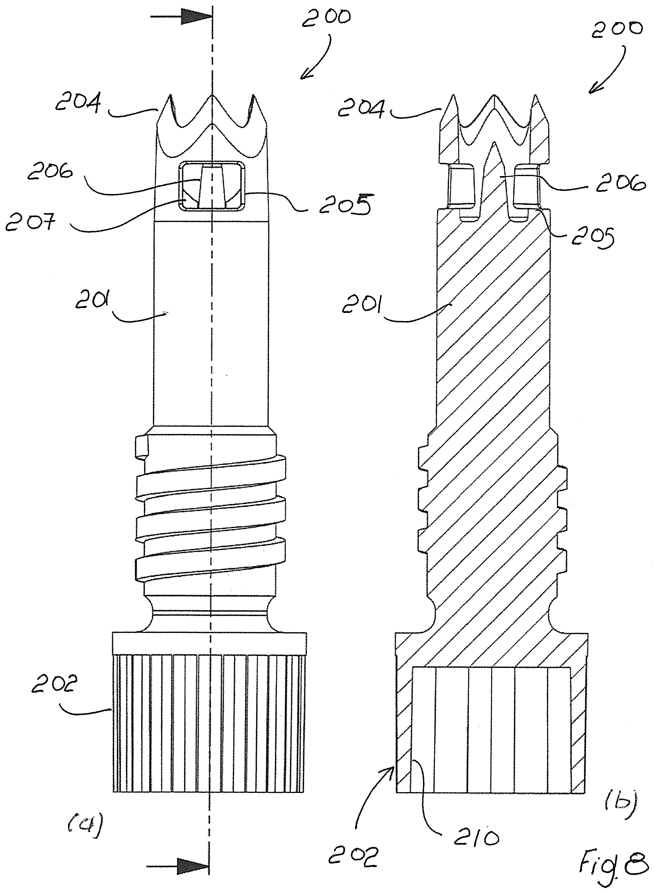

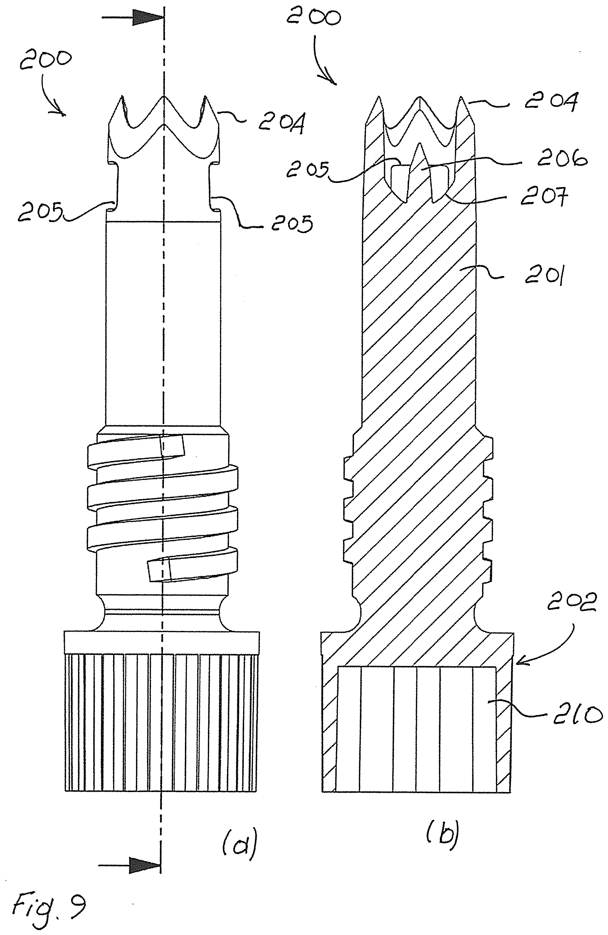

Fig. 8(a) is an elevational view of the apparatus of Fig. 6 and Fig. 8(b) is a cross-sectional view in the direction of the arrows of Fig. 8(a), and Fig. 9(a) is another elevational view of this apparatus from a different angle and Fig. 9(b) is a cross-sectional view in the direction of the arrows of Fig. 9(a);

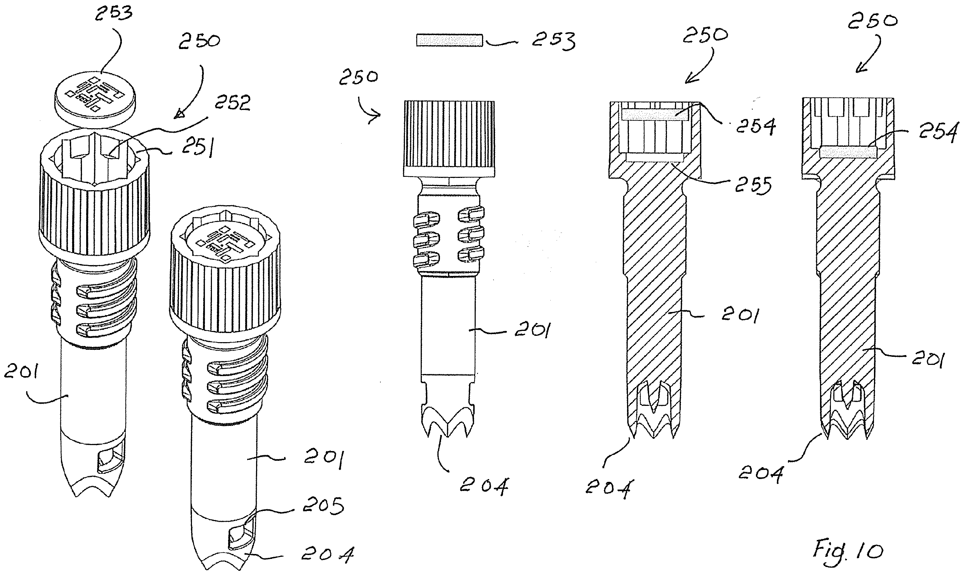

Fig. 10 is a set of perspective, elevational, and sectional views of an apparatus having a recess for receiving and holding a label with a unique identifier; and

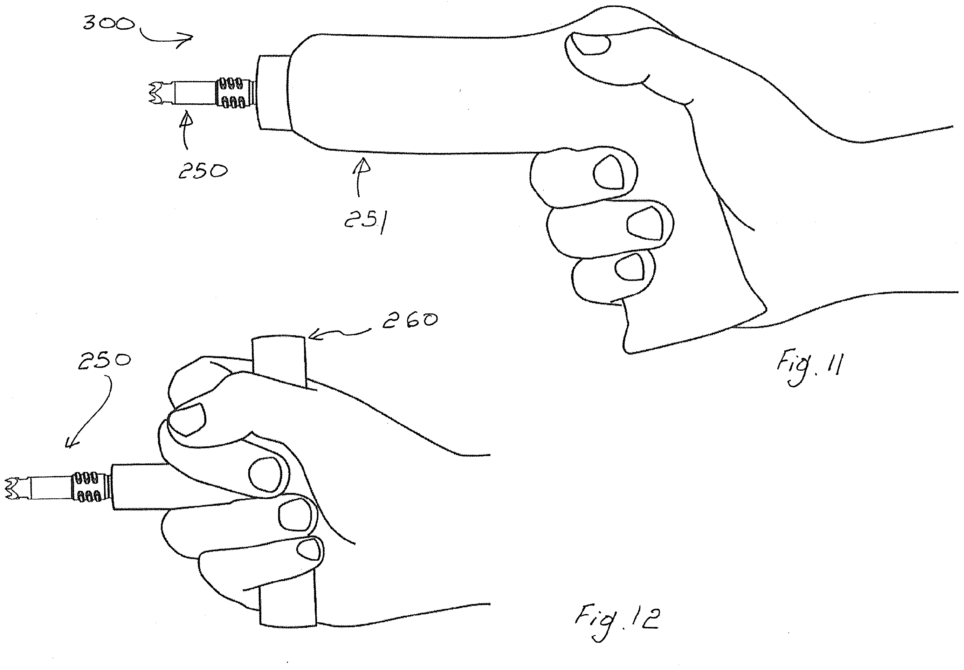

Figs. 11 and 12 are diagrammatic views of tools for operation of a sampling apparatus of the invention with less manual effort.

### Description of the Embodiments

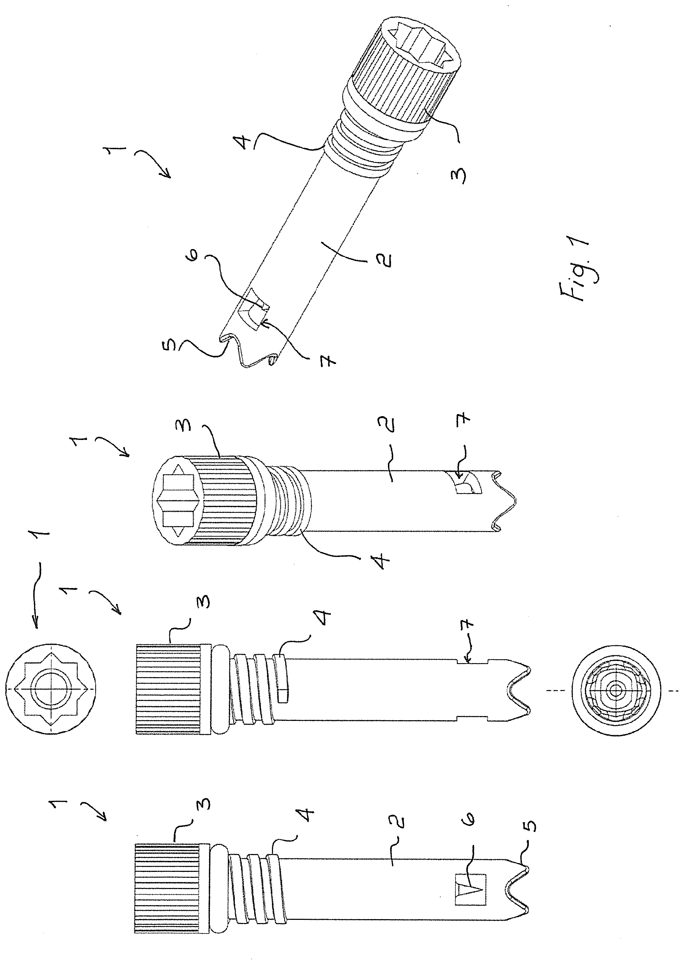

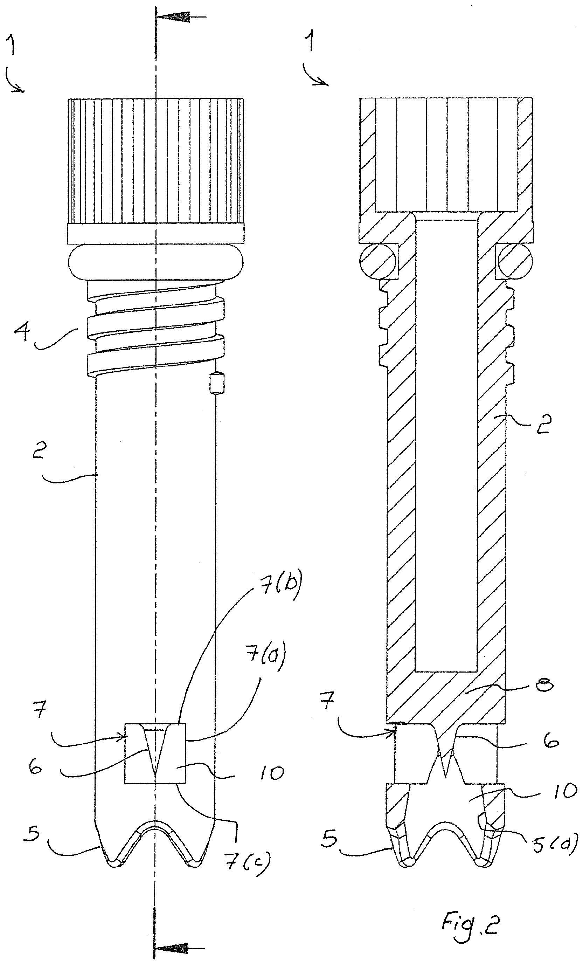

Referring to Figs. 1 and 2 a sampling apparatus 1 comprises a tubular stem 2, at a proximal end of which is a knurled cylindrical hand grip 3, just distal of which is an external screw thread 4.

The distal end of the apparatus 1 has four axially-extending teeth 5 forming a distal tip. There is a volume or recess 10 between the teeth 5, within which there is an axial distally-extending sample material guide, in this case an axial spike 6. The spike 6 extends from a wall 8 across the stem 2 (best shown in Fig. 2). Hence, the tip of the apparatus has a recess or volume 10 through which the spike 6 centrally extends.

The tip also includes a sample material receiver, in this embodiment two rectangular openings 7 in the wall of the stem at an axial position overlapping the spike 6. Each opening 7 has opposed axially-extending side edges 7(a), a proximal side edge 7(b), and a distal side edge 7(c).

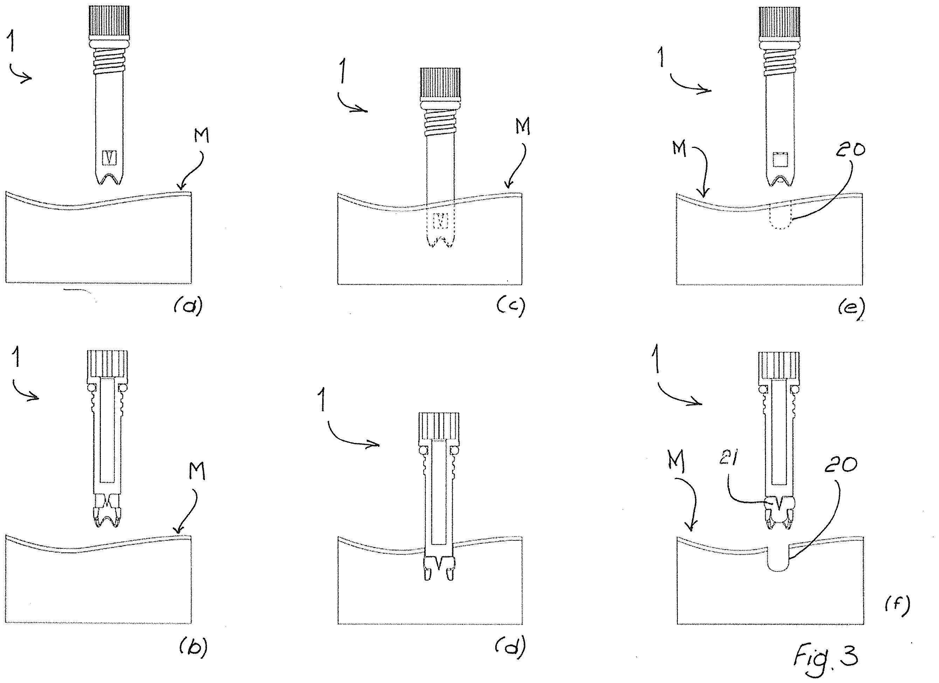

The apparatus 1 is used as shown in Fig. 3. Figs. 3(a) and 3(b) show it approaching a meat carcass M. This action may be manual or automated. Where it is manual it is very simple and convenient for the user to manually grip the apparatus by holding it at the knurled cylindrical hand grip 3. Figs. 3(c) and 3(d) show the tip penetrating the meat M. The teeth 5 penetrate the material M at four points and so facilitate easy apparatus penetration into the material. This number of teeth has been found to work well, but it could alternatively be any number from two to 6 or more, depending on conditions such as sample size.

Advantageously, the guide provides a radial component to relative movement of the material within the recess. The action of axially moving into the meat causes the spike 6 tapered configuration to push meat within the recess 10 radially outwardly, so that some of it becomes lodged within the recess 10. This action is assisted by a tapered configuration of the teeth 5 at their internal surfaces 5(a), sloping proximally and inwardly. Movement of material into the recess 10 around the spike 6 and into the openings 7 is best shown in Figs. 3 (c) and (d). If there is twisting at the most distal position the material within the recess 10 is separated, primarily because the axially-extending side edges 7(a) of the openings 7 grip the material and cause it to rotate and hence separate at the distal end.

The apparatus 1 is then withdrawn, as shown in Figs. 3(e) and 3(f). Sample material is gripped within the recess 10 by friction, by being compacted, and also by the distal side edges 7(c) of the openings 7. So, when the apparatus 1 is withdrawn a small sample 21 is retained within the recess 10. The action may involve maintaining rotation on removal, further ensuring that there is a quick and simple action to obtain a sample of uniform size.

The sample size depends on the size of the recess, which is chosen to suit the application. This may for example be in the range of 20 µl to about 20 ml. For example, where the internal diameter of the recess 10 is about 3 mm and its depth is about 5 mm the sample 21 size is about 0.05ml where the sample material is meat. In general terms the recess size is chosen to suit the application. It may for example have an internal width dimension in the range of 2 mm to 30 mm and a depth (axial direction) in the range of 2mm to 30 mm. A fixed volume of tissue is removed without additional equipment.

The sample 21 may then be used in any of a variety of testing systems in a laboratory, or indeed in the factory.

It will be appreciated that the apparatus 1 can be used with little training and skill, is very quick to use, and has negligible impact on the bulk material from which the sample is taken.

An apparatus of the invention may include a receptacle to receive the sample either for the purposes of transport and storage, and/or for performing a test.

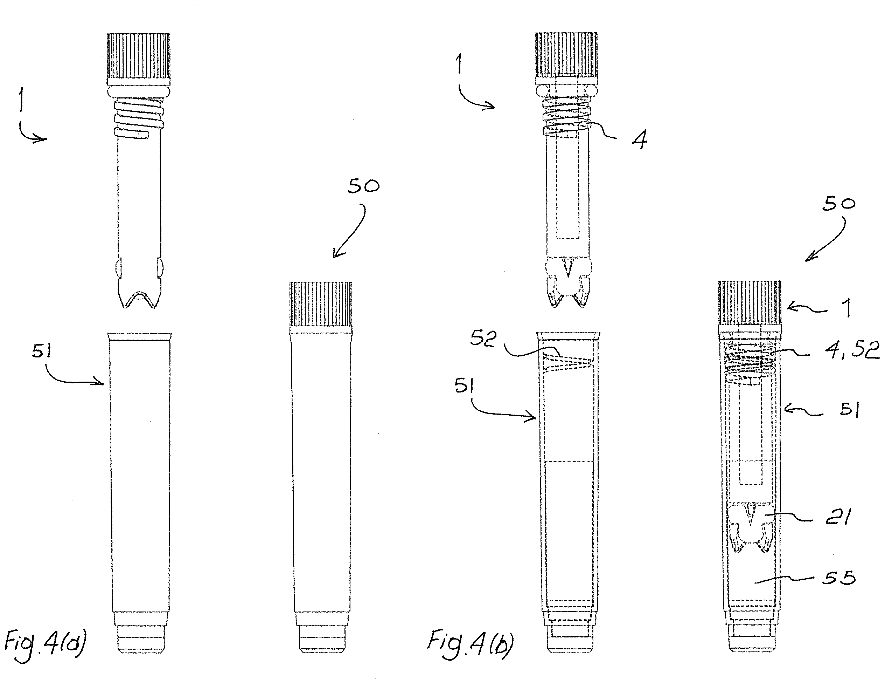

Figs. 4(a) and 4(b) show an apparatus 50 including the apparatus 1 and a receptacle 51. The latter is in the form of a closed tube, having internal threads 52 matching the (external) threads 4. To maintain integrity of the sample 21, the user simply inserts the stem 2 into the receptacle 51 until the threads 4 and 52 meet, and mutually rotates until the stem is tightly held within the receptacle 51.

The receptacle 51 may be supplied with a liquid 55 for pre-treatment of the sample 21 before analysis, or indeed for analysis. For the latter, the receptacle is preferably transparent and is presealed by a removable seal. Where the liquid is a tissue fixative, the exposure of tissue in the windows is advantageous and improves time to fixation.

Referring to Fig. 5 an apparatus comprises a sample capture device 150 and a reaction tube 160. The capture device 150 has a proximal handle part 170 with a handle 151, an O-ring seal 152, and external screw threads 153. The proximal handle part is detachable from a distal part 175. The latter has distal tip teeth 154, distal openings 155, and a spike 156 in an arrangement generally similar to that of the apparatus 1. In addition, the distal part 175 has slots 158 arranged around its circumference to form a circumferential filter for access to an internal chamber 157.

The handle part 170 is connected to the distal part 175 by a connector 159 having an annular rim 171 at the proximal end of the distal part 175, a rim 172 at the distal end of the handle part 170, and solidified wax 173 holding the parts together at the rims to form a seal. The rims 171 and 172 are a friction fit with the wax in-between. The thickness of the wax film is exaggerated in the drawings for clarity.

The receptacle 160 has an analysis liquid 161 sealed by a breakable membrane 162. When the sample capture device 150 is pushed into the receptacle 160 the teeth 154 break the seal 162 and allow access of a liquid (such as a lysis buffer liquid) to a sample 165 retained in the recess of the tip of the device 150. Also, the seal 159 is broken by application of heat to a temperature sufficient to cause the wax 173 to melt.

The handle part 170 can then be removed as shown in Fig. 5(i). Liquid carrying DNA from the meat sample 165 is able to flow into the chamber 157. From there, it can be pipetted out for analysis using a pipette 180, as illustrated in Fig. 5(j).

It will be appreciated that this embodiment allows not only easy taking of a sample, but also very convenient insertion of the sample into an environment for treatment and downstream analysis. An example could be automated tissue fixation and histology.

Referring to Figs. 6 to 9 an alternative apparatus, 200, has a stem 201, a proximal grip 202 and a tip 203. The tip 203 has teeth 204, opposed openings 205, and a spike 206. This configuration is broadly similar to that of the apparatus 1. However, in addition, there is a pair of blades 207 extending radially between the spike 206 and an internal wall of the recess. Each blade 207 has a concave-curved top edge, and it extends to a height in the axial direction which is lower than the point of the spike 206.

The blade 207 has the effect, in use, of assisting with cutting the sample to help form a plug located within the tip and helping grip the plug during a twisting action to aid removal. It also provides some additional structural support to the spike 206.

In use, when the apparatus 200 is within the sample material the blades 207 grip into the material at the proximal end. Hence, if the apparatus is rotated there is additional twisting grip on the sample to assist separation of the sample from the bulk material.

Also, as shown particularly in Figs. 7 to 9 the handle 20 has an octagonal socket 210. This allows gripping by a tool and/or insertion of a label with a unique identifier. The socket may have any desired number of sides to allow automation or connection to a handle or other tool.

Referring to Fig. 10 an apparatus 250 has parts similar to those of Figs. 6 to 9 indicated by the same reference numerals. In this case, there is a socket 251 in the handle, again with an internal octagonal surface configuration. This socket has two locations to receive a label. There are proximal ledges 252 to support a disc-shaped label 253. Also, there is a distal seat 255 to support a label 254.

The handle therefore allows simple label-retention and/or engagement with a tool. This is important for automation, such as 48 or 96 well formats that would be commonly used to automate capping or de-capping.

Tools for use with the apparatus are shown in Figs. 11 and 12. In Fig. 11 a drill or gun-shaped tool 251 engages the device 250 to automatically push and/or rotate and/or withdraw the device under user control. As shown in Fig. 12 a simple manual tool 260 has a T-shape, with the stem engaging the device. While this tool does not allow automation, it does allow more ergonomic and convenient gripping of the apparatus for manual operation.

The socket in the proximal end is also convenient for gripping downstream by an automation system for analysis.

Use of the device has demonstrated that it allows a reproducible sample or plug of tissue with a coefficient of variation (CV) of 10% to 15% with the mass of tissue varying with sample density ~50mg) from a variety of tissue types including, but not limited to, beef, lamb, chicken, mushrooms, mango. Sampling time is reduced, to a simple 'push-twist-pull-store' movement taking 10 to 30 seconds, after which the sample is safely stored and sealed. This is much better and more convenient than the traditional manual techniques with dangerous scalpels and electronic balances, which took several minutes and is more prone to errors, mix-ups, and crosscontamination.

The table below gives examples of sampling data.

**Table 1: Typical Performance: 100 Food samples (20 each):**

| **Food Type** | Sample Time (sec) | Mean Sample (mg) | CV |
|---|---|---|---|
| Mushrooms | 8 | 35.6 | 12.9% |
| Gigot Lamb Chop | 12 | 44 | 13.8% |
| Ma ngo | 8 | 47.5 | 10.1% |
| Bean Sprouts | 22 | 47.9 | 13.1% |
| Sweet Red Pepper | 29 | 49 | 10.6% |
| Beef Round Steak | 10 | 49.4 | 15.3% |
| Pork Chop | 18 | 50.9 | 9.8% |
| Chicken Breast | 8 | 54.7 | 14.0% |
| White Cheddar | 12 | 58.9 | 10.4% |
| Nectarine | 13 | 59.5 | 10.2% |

It will be appreciated that the device can be used for other sample types, for instance, sampling the adipose fin from certain fish species, coring a sample from shellfish; or coring a sample from a plant or crop species.

The scope of the invention is given by the appended set of claims.

The guide may not be in the form of an axial spike. It may alternatively be in the form of a ridge across some or all of the recess. It may have multiple guide members such as multiple spikes or ridges. The guide may comprise a recess wall sloped for pushing material towards and into a receiver such as an opening. The guide is within the recess, between side walls of the recess.

Also, the receiver may be an internal surface of the recess without an opening or projection, the internal surface being configured to capture sample material which has been guided by the guide. It may for example define a narrowing space in the proximal direction for compaction of sample material. Where there is an opening it may be a blind opening, presenting only one or more side edges facing into the recess. The receiver may comprise projections such as ridges or barbs facing into the recess. The openings may be of a different shape than illustrated, such as round for example. The receiver has an through opening.

Also, the proximal end of the apparatus may not be particularly configured for easy manual gripping, in which case it may be suited only for gripping by a tool.

Also, in the embodiments having a separable device with multiple parts, rather than having a seal which is broken by heating of wax it may alternatively be a frangible seal which breaks by action of a feature within the tube against it. Where there is wax, this may hold beads with sample probes attached for coming into contact with the lysis buffer when the wax melts.

It is envisaged that the receptacle may include a compound for causing an exothermic reaction to heat the lysate. An example is CaO. In this case there may be two breakable seals, a lower one containing the exothermic compound, and an upper seal retaining the liquid. This would avoid need to heat from an external source.

## Claims

1. A sampling apparatus comprising:
a stem (2) having a grip (3) at a proximal end and a tip (5) at a distal end; and
a recess (10) in the tip, wherein the apparatus further comprises:
at least one receiver (7) in a side wall of the tip, the receiver comprising one or more through openings (7) in a side wall of the tip, and
a guide (6) for pressing sample material within the recess towards the receiver (7) as the tip (5) is pressed into the material,
wherein:
the guide is within the recess and is distally-extending along a longitudinal axis of the stem (2) and wherein the guide comprises at least one
spike (6) having an apex facing distally, or a ridge extending across at least part of the recess; and
the guide (6) and the receiver (7) are arranged so that the material is forced to protrude out of the through opening as the tip is pressed into the material.

2. A sampling apparatus as claimed in claim 1, wherein the guide comprises a spike (6) extending centrally within the recess.

3. A sampling apparatus as claimed in claims 1 or 2, wherein there are at least two opposed openings (7).

4. A sampling apparatus as claimed in any preceding claim, wherein the grip is a hand grip (3).

5. A sampling apparatus as claimed in any preceding claim, wherein the tip includes a plurality of teeth (5) pointing distally, and at least one of said teeth has an internal surface extending inwardly and proximally.

6. A sampling apparatus as claimed in any preceding claim, wherein the tip further comprises a gripping blade (207) within the recess, wherein the gripping blade (207) extends between the guide (206) and a recess side wall, and there is a pair of gripping blades (207), one on each side of the guide (206), and the gripping blade extends distally less than the guide.

7. A sampling apparatus as claimed in any preceding claim, wherein the apparatus comprises at least one seat (252, 255) for holding a label, and wherein the grip comprises a socket (251) for engagement with a tool, and said seat (252, 255) is within said socket.

8. A sampling apparatus as claimed in any preceding claim, wherein the apparatus further comprises a receptacle (50) within which the stem (2) fits.

9. A sampling apparatus as claimed in claim 8, wherein the stem (2) and the receptacle (50) are configured so that there is a space (55) below the tip in the receptacle, and wherein the stem and the receptacle have inter-engaging fastener parts (4, 52) for fastening the stem in the receptacle.

10. A sampling apparatus as claimed in claim 9, wherein the receptacle has a removable seal (162), and includes a liquid (161) for treatment of a sample or for testing of a sample.

11. A sampling apparatus as claimed in any preceding claim, wherein the stem includes an internal chamber (157) and an inlet for analysis liquid, and wherein the inlet is in the form of a filter with a plurality of openings (158) in a stem wall, and optionally the filter openings (158) are arranged around the circumference of the stem.

12. A sampling apparatus as claimed in any preceding claim, wherein the stem is in two parts (170, 175) held together by a seal (159), said parts being a proximal handle part and a distal chamber part, and wherein the seal includes solidified wax (173) for retaining the parts together when the wax is solid, and for allowing the parts to separate when the wax melts, and optionally the seal includes a frangible portion (162) allowing break-off by contact with the receptacle.

13. A sampling apparatus as claimed in claim 12, wherein the apparatus has a receptacle (160) for receiving the stem (150), and the apparatus has a feature (154) to break the frangible portion as the stem is introduced into the receptacle.

14. A method of taking a sample from a bulk material using an apparatus of any preceding claim, the method comprising:
gripping the grip (3),
pushing the tip (5) of the stem (2) into the bulk material so that the guide (6) penetrates into the bulk material and urges some material across the recess towards the receiver, and
withdrawing the stem.

15. A method as claimed in claim 14, further comprising rotating the stem when the guide has penetrated the bulk material.

## Patentansprüche

1. Probenahmevorrichtung, umfassend:
einen Schaft (2) mit einem Griff (3) an einem proximalen Ende und einer Spitze (5) an einem distalen Ende; und
eine Aussparung (10) in der Spitze,
wobei die Vorrichtung ferner Folgendes umfasst:
mindestens ein Sammelgefäß (7) in einer Seitenwand der Spitze, wobei das Sammelgefäß eine oder mehrere Durchgangsöffnungen (7) in einer Seitenwand der Spitze umfasst, und
eine Führung (6) zum Pressen von Probenmaterial in der Aussparung in Richtung des Sammelgefäßes (7), wenn die Spitze (5) in das Material gepresst wird, wobei:
sich die Führung in der Aussparung befindet und sich entlang einer Längsachse des Schafts (2) distal erstreckt, und wobei die Führung mindestens einen Dorn (6) mit einem nach distal weisenden Scheitel oder einen sich über mindestens einen Teil der Aussparung hinweg erstreckenden Grat umfasst; und
die Führung (6) und das Sammelgefäß (7) derart angeordnet sind, dass das Material gezwungen wird, aus der Durchgangsöffnung hervorzuquellen, wenn die Spitze in das Material gepresst wird.

2. Probenahmevorrichtung nach Anspruch 1, wobei die Führung einen Dorn (6) umfasst, der sich in der Aussparung mittig erstreckt.

3. Probenahmevorrichtung nach Anspruch 1 oder 2, wobei mindestens zwei gegenüberliegende Öffnungen (7) vorhanden sind.

4. Probenahmevorrichtung nach einem der vorangehenden Ansprüche, wobei es sich bei dem Griff um einen Handgriff (3) handelt.

5. Probenahmevorrichtung nach einem der vorangehenden Ansprüche, wobei die Spitze eine Vielzahl von nach distal weisenden Zähnen (5) umfasst und mindestens einer der Zähne eine sich nach innen und proximal erstreckende Innenoberfläche aufweist.

6. Probenahmevorrichtung nach einem der vorangehenden Ansprüche, wobei die Spitze ferner ein Greifmesser (207) in der Aussparung umfasst, wobei sich das Greifmesser (207) zwischen der Führung (206) und einer Aussparungsseitenwand erstreckt, und ein Paar Greifmesser (207) vorhanden ist, je eines auf jeder Seite der Führung (206), und sich das Greifmesser distal weniger erstreckt als die Führung.

7. Probenahmevorrichtung nach einem der vorangehenden Ansprüche, wobei die Vorrichtung mindestens eine Aufnahme (252, 255) zum Halten eines Etiketts umfasst, und wobei der Griff eine Buchse (251) für den Eingriff mit einem Werkzeug umfasst und sich die Aufnahme (252, 255) in der Buchse befindet.

8. Probenahmevorrichtung nach einem der vorangehenden Ansprüche, wobei die Vorrichtung ferner ein Behältnis (50) umfasst, in das der Schaft (2) passt.

9. Probenahmevorrichtung nach Anspruch 8, wobei der Schaft (2) und das Behältnis (50) derart konfiguriert sind, dass sich unter der Spitze in dem Behältnis ein Zwischenraum (55) befindet, und wobei der Schaft und das Behältnis ineinander eingreifende Befestigungsteile (4, 52) aufweisen, um den Schaft in dem Behältnis zu befestigen.

10. Probenahmevorrichtung nach Anspruch 9, wobei das Behältnis ein entfernbares Siegel (162) aufweist und eine Flüssigkeit (161) zur Aufbereitung einer Probe oder zum Testen einer Probe beinhaltet.

11. Probenahmevorrichtung nach einem der vorangehenden Ansprüche, wobei der Schaft eine innere Kammer (157) und einen Einlass für Analyseflüssigkeit umfasst, und wobei der Einlass in Form eines Filters mit einer Vielzahl von Öffnungen (158) in einer Schaftwand ist, und wobei optional die Filteröffnungen (158) um den Umfang des Schafts angeordnet sind.

12. Probenahmevorrichtung nach einem der vorangehenden Ansprüche, wobei der Schaft in zwei Teilen (170, 175) ist, die durch ein Siegel (159) aneinandergehalten werden, wobei es sich bei den Teilen um einen proximalen Haltegriffteil und einen distalen Kammerteil handelt, und wobei das Siegel erstarrtes Wachs (173) zum Halten der Teile aneinander, wenn das Wachs erstarrt ist, und zum Zulassen, dass sich die Teile trennen, wenn das Wachs schmilzt, umfasst, und wobei optional das Siegel einen zerbrechlichen Abschnitt (162) umfasst, der das Abbrechen durch Kontakt mit dem Behältnis ermöglicht.

13. Probenahmevorrichtung nach Anspruch 12, wobei die Vorrichtung ein Behältnis (160) zum Aufnehmen des Schafts (150) aufweist und die Vorrichtung ein Gebilde (154) zum Brechen des zerbrechlichen Abschnitts, wenn der Schaft in das Behältnis eingeführt wird, aufweist.

14. Verfahren zum Nehmen einer Probe aus einem Massenmaterial unter Verwendung einer Vorrichtung nach einem der vorangehenden Ansprüche, wobei das Verfahren Folgendes umfasst:
Greifen des Griffs (3), Drücken der Spitze (5) des Schafts (2) in das Massenmaterial, sodass die Führung (6) in das Massenmaterial eindringt und etwas Material über die Aussparung hinweg in Richtung des Sammelgefäßes drängt, und
Herausziehen des Schafts.

15. Verfahren nach Anspruch 14, ferner umfassend das Drehen des Schafts, wenn die Führung in das Massenmaterial eingedrungen ist.

## Revendications

1. Appareil d'échantillonnage comportant :
une tige (2) ayant un élément de préhension (3) au niveau d'une extrémité proximale et une partie formant bout (5) au niveau d'une extrémité distale ; et
un évidement (10) dans la partie formant bout,
dans lequel l'appareil comporte par ailleurs :
au moins une partie de réception (7) dans une paroi latérale de la partie formant bout, la partie de réception comportant une ou plusieurs ouvertures traversantes (7) dans une paroi latérale de la partie formant bout, et
un dispositif de guidage (6) servant à enfoncer le matériau d'échantillon à l'intérieur de l'évidement vers la partie de réception (7) alors que la partie formant bout (5) est enfoncée jusque dans le matériau,
dans lequel :
le dispositif de guidage est à l'intérieur de l'évidement et s'étend de manière distale le long d'un axe longitudinal de la tige (2) et dans lequel le dispositif de guidage comporte au moins une pointe (6) ayant un sommet orienté de manière distale, ou une nervure s'étendant en travers d'au moins une partie de l'évidement ; et
le dispositif de guidage (6) et la partie de réception (7) sont agencés de telle sorte que le matériau est forcé afin de dépasser hors de l'ouverture traversante alors que la partie formant bout est enfoncée jusque dans le matériau.

2. Appareil d'échantillonnage selon la revendication 1, dans lequel le dispositif de guidage comporte une pointe (6) s'étendant de manière centrale à l'intérieur de l'évidement.

3. Appareil d'échantillonnage selon la revendication 1 ou la revendication 2, dans lequel il y a au moins deux ouvertures opposées (7).

4. Appareil d'échantillonnage selon l'une quelconque des revendications précédentes, dans lequel l'élément de préhension est une poignée (3).

5. Appareil d'échantillonnage selon l'une quelconque des revendications précédentes, dans lequel la partie formant bout comprend une pluralité de dents (5) pointant de manière distale, et au moins l'une desdites dents a une surface interne s'étendant vers l'intérieur et de manière proximale.

6. Appareil d'échantillonnage selon l'une quelconque des revendications précédentes, dans lequel la partie formant bout comporte par ailleurs une lame de préhension (207) à l'intérieur de l'évidement, dans lequel la lame de préhension (207) s'étend entre le dispositif de guidage (206) et une paroi latérale d'évidement, et il y a une paire de lames de préhension (207), une de chaque côté du dispositif de guidage (206), et la lame de préhension s'étend moins de manière distale par rapport au dispositif de guidage.

7. Appareil d'échantillonnage selon l'une quelconque des revendications précédentes, dans lequel l'appareil comporte au moins un siège (252, 255) servant à retenir une étiquette, et dans lequel l'élément de préhension comporte une douille (251) à des fins de mise en prise avec un outil, et ledit siège (252, 255) se trouve à l'intérieur de ladite douille.

8. Appareil d'échantillonnage selon l'une quelconque des revendications précédentes, dans lequel l'appareil comporte par ailleurs un réceptacle (50) à l'intérieur duquel la tige (2) s'adapte.

9. Appareil d'échantillonnage selon la revendication 8, dans lequel la tige (2) et le réceptacle (50) sont configurés de telle sorte qu'il y a un espace (55) sous la partie formant bout dans le réceptacle, et dans lequel la tige et le réceptacle ont des parties de fixation en mesure de se mettre mutuellement en prise (4, 52) à des fins de fixation de la tige dans le réceptacle.

10. Appareil d'échantillonnage selon la revendication 9, dans lequel le réceptacle a un joint d'étanchéité amovible (162), et comprend un liquide (161) à des fins de traitement d'un échantillon ou à des fins de test d'un échantillon.

11. Appareil d'échantillonnage selon l'une quelconque des revendications précédentes, dans lequel la tige comprend une chambre interne (157) et un orifice d'entrée pour le liquide d'analyse, et dans lequel l'orifice d'entrée est sous la forme d'un filtre avec une pluralité d'ouvertures (158) dans une paroi de tige, et éventuellement les ouvertures de filtre (158) sont agencées autour de la circonférence de la tige.

12. Appareil d'échantillonnage selon l'une quelconque des revendications précédentes, dans lequel la tige est en deux parties (170, 175) retenues ensemble au moyen d'un joint d'étanchéité (159), lesdites parties étant une partie formant poignée proximale et une partie formant chambre distale, et dans lequel le joint d'étanchéité comprend de la cire solidifiée (173) servant à retenir les parties ensemble quand la cire est solide, et à permettre aux parties de se séparer quand la cire fond, et éventuellement le joint d'étanchéité comprend une partie cassante (162) permettant la séparation par contact avec le réceptacle.

13. Appareil d'échantillonnage selon la revendication 12, dans lequel l'appareil a un réceptacle (160) servant à recevoir la tige (150), et l'appareil a une caractéristique (154) servant à casser la partie cassante lorsque la tige est introduite dans le réceptacle.

14. Procédé servant à prélever un échantillon en provenance d'un matériau en vrac au moyen d'un appareil selon l'une quelconque des revendications précédentes, le procédé comportant les étapes consistant à :
saisir l'élément de préhension (3),
pousser la partie formant bout (5) de la tige (2) dans le matériau en vrac de telle sorte que le dispositif de guidage (6) pénètre dans le matériau en vrac et sollicite du matériau en travers de l'évidement vers la partie de réception, et
retirer la tige.

15. Procédé selon la revendication 14, comportant par ailleurs l'étape consistant à faire tourner la tige quand le dispositif de guidage a pénétré dans le matériau en vrac.
